# EUROPEAN PATENT APPLICATION

(11) **EP 2 530 778 A1**
(43) Date of publication of application: **05.12.2012**
(21) Application number: 10844542.0
(22) Date of filing: 11.11.2010
(51) Int. Cl.: H01M 10/50, H01M 2/10, H01M 2/20

(54) **CELL MODULE**

(30) Priority: 29.01.2010 JP 2010019212
(71) Applicant: Panasonic Corporation, Kadoma-shi Osaka 571-8501 (JP)
(72) Inventor: YASUI, Shunsuke, Osaka 540-6207 (JP); ITOI, Toshiki, Osaka 540-6207 (JP); KISHII, Daisuke, Osaka 540-6207 (JP); GESHI, Shinya, Osaka 540-6207 (JP); OTAKE, Yuji, Osaka 540-6207 (JP)
(74) Representative: Grünecker, Kinkeldey, Stockmair & Schwanhäusser
(86) International application number: PCT/JP2010/006645
(87) International publication number: WO 2011/092773

(57) **Abstract**

The battery module includes a plurality of cells serving as cylindrical secondary batteries; and a temperature regulator configured to regulate a temperature of the cells, wherein the cells are aligned with their side surfaces adjacent to each other, all the cells are electrically connected to each other in series, the temperature regulator includes a heat transferring member, and a heat dissipation member, the heat transferring member includes a plurality of insertion portions inserted into space surrounded by the side surfaces of the plurality of cells, and a base portion facing lower surfaces of the cells, at least a part of the heat transferring member which faces the cells is made of an electrically insulative substance, and the cells connected to each other in series are isolated from each other by the heat transferring member in a liquid-tight manner at the side surfaces and bottom surfaces of the cells.

## Description

### TECHNICAL FIELD

The present invention relates to battery modules, and specifically to battery modules including a plurality of cells serving as secondary batteries and a temperature regulator to regulate the temperature of the cells.

### BACKGROUND ART

Battery packs including a plurality of batteries accommodated in a case to allow an output of a predetermined voltage and capacitance are widely used as power sources of various devices, vehicles, etc. Specifically, the technique of forming modules of battery assemblies obtained by connecting general-purpose batteries in parallel and/or in series to output a predetermined voltage and capacity, and combining the battery modules together to be applicable to various applications is beginning to be used. This module forming technique can reduce the size and weight of the battery modules themselves by increasing the performance of batteries accommodated in the battery modules. Thus, this module forming technique has various advantages, an example of which is that workability can be improved in assembling a battery pack, and the flexibility in mounting the battery module in areas of limited space, such as a vehicle, can be increased.

For example, the battery modules using lithium ion secondary batteries have been and are being developed as power sources of vehicles. The battery modules have to be provided with temperature regulators because used batteries are not limited to lithium ion secondary batteries, and the optimum range of operation temperature depends on types of batteries.

Description of such a mechanism for regulating temperature is found in, for example, Patent Documents 1-6.

Patent Document 1 describes a technique in which heat dissipating pins embedded in a case are provided between a plurality of single cells aligned with their axes being parallel to each other so that heat from the single cells is dissipated via end faces of the heat dissipating pins into the air.

Patent Document 2 describes a technique in which in a battery pack including bundled cylindrical batteries, pipe-like elastic members having heat conductivity are inserted into gaps between the cylindrical batteries, and heat-conductive rigid members are inserted into the elastic members.

Patent Document 3 describes a technique for a battery pack including: an inner case in which a plurality of batteries are housed in parallel; a lead plate made of a metal plate which is disposed on a lead plate mounting surface of the inner case, and is coupled to electrodes at both ends of the batteries to connect the batteries adjacent to each other; an outer case in which the inner case is accommodated; and a sheet heater disposed between the inner case and the outer case to heat the batteries, wherein the sheet heater is disposed on the lead plate mounting surface of the inner case to heat the batteries via the lead plate made of the metal plate.

Patent Document 4 describes a technique in which a container which receives and holds a plurality of rod-like battery modules by arranging them without space, and is thermally coupled to the respective battery modules by abutting on the circumferential surfaces of the respective battery modules is provided, a heat pipe for dissipating heat transferred from the battery modules to the outside is installed in the container; and a heat insulator is provided to cover the circumference of the container.

Patent Document 5 describes a technique in which battery cells obtained by connecting single cells in straight line are aligned substantially parallel, a power supply module obtained by connecting these battery cells in series or in parallel is placed in a holder, and a positioning fit portion for holding the battery cells under their positioned state, and a coolant route for keeping apart from the positioning fit portion nearly parallel and causing cooling medium to flow are formed within an inner surface of the holder.

Patent Document 6 describes a technique for a storage battery power supply device including a cooling pipeline embedded in cooling blocks A and B made of material having excellent thermal conductivity, and a storage battery accommodated in a storage battery accommodation hole, wherein heat from each of single cells included in the storage battery is taken off by the cooling blocks A and B in tight attachment, and the cooling blocks A and B are cooled by coolant flowing in the cooling pipeline.

### CITATION LIST

### PATENT DOCUMENT

PATENT DOCUMENT 1: Japanese Patent Application No. H08-180854
PATENT DOCUMENT 2: Japanese Patent Publication No. 2002-184374
PATENT DOCUMENT 3: Japanese Patent Publication No. 2007-213939
PATENT DOCUMENT 4: Japanese Patent Publication No. 2001-76771
PATENT DOCUMENT 5: Japanese Patent Publication No. 2005-285455
PATENT DOCUMENT 6: Japanese Patent Publication No. H10-106521

### SUMMARY OF THE INVENTION

### TECHNICAL PROBLEM

However, the techniques described in Patent Documents 1-6 are the techniques of simply cooling or heating single cells, but ensuring safety and sustaining charge/discharge, which are specific to a battery module obtained by bundling a plurality of secondary batteries, are not satisfactorily considered.

For example, in the configurations described in Patent Documents 1-6, when liquid such as a leakage from a battery, rainwater, etc. enters a battery module, a short circuit occurs between the series-connected single cells, which stops charge/discharge of the entirety of the battery module, and the temperature of the plurality of single cells rises. When such a situation occurs in a battery module installed as a power source for driving a vehicle, a critical situation in which a motor suddenly stops while driving is caused. Alternatively, when such a situation occurs in a battery module used as a power source in a factory, a production line stops, which leads to big losses.

### SOLUTION TO THE PROBLEM

From the foregoing, it is an object of the present invention to provide a battery module including a device capable of safely and efficiently regulating the temperature of a plurality of secondary batteries.

A battery module of the present invention includes: a plurality of cells serving as cylindrical secondary batteries; and a temperature regulator configured to regulate a temperature of the cells, wherein the cells are aligned with their side surfaces adjacent to each other, and all the cells or assemblies each obtained by connecting the cells in parallel are electrically connected to each other in series, the temperature regulator includes a heat transferring member configured to take or give heat from or to the cells, and a heat dissipation member to which the heat transferring member is fixed, the heat transferring member includes a plurality of insertion portions inserted into space surrounded by the side surfaces of the plurality of cells, and a base portion facing lower surfaces of the cells, at least a part of the heat transferring member which faces the cells is made of an electrically insulative substance, and the cells connected to each other in series are isolated from each other by the heat transferring member in a liquid-tight manner at the side surfaces and bottom surfaces of the cells.

### ADVANTAGES OF THE INVENTION

In the battery module of the present invention, the series-connected cells are isolated from each other by the heat transferring member in a liquid-tight manner at the side surfaces and bottom surfaces of the cells, so that it is possible to ensure prevention of a short circuit caused due to leakage between the series-connected cells or liquid entering space between the series-connected cells, thereby allowing efficient regulation of the temperature of the cells.

### BRIEF DESCRIPTION OF THE DRAWINGS

[FIG. 1] FIG. 1 is a cross-sectional view schematically illustrating a cell.
[FIG. 2] FIG. 2 is an exploded view schematically illustrating a configuration of a battery module of a first embodiment.
[FIG. 3A] FIG. 3A is a top view schematically illustrating the battery module, where a lid member and an inner lid are removed.
[FIG. 3B] FIG. 3B is a top view schematically illustrating the battery module of FIG. 3A, where an upper-surface substrate is also removed.
[FIG. 4] FIG. 4 is a perspective view illustrating the cell wrapped with a reinforcing metal plate.
[FIG. 5] FIG. 5 is an enlarged perspective view illustrating a part of a temperature regulating main body portion.
[FIG. 6] FIG. 6 is a cross-sectional view schematically illustrating a gas release mechanism of the battery module.
[FIG. 7] FIG. 7 is an enlarged cross-sectional view illustrating a major part of the battery module.
[FIG. 8] FIG. 8 is an enlarged cross-sectional view illustrating a major part of a heat transferring member.
[FIG. 9] FIG. 9 is a cross-sectional view illustrating a part in the vicinity of a side surface of the battery module.
[FIG. 10] FIG. 10 is a cross-sectional view illustrating a part in the vicinity of a side surface of another battery module.
[FIG. 11] FIG. 11 is a cross-sectional view illustrating a rod-like metal member in which a heat pipe is embedded.
[FIG. 12] FIG. 12 is an exploded view schematically illustrating a battery module of a first variation of the first embodiment.
[FIG. 13] FIG. 13 is a view illustrating another reinforcing metal plate.
[FIG. 14] FIG. 14 is a cross-sectional view of the reinforcing metal plate.
[FIG. 15] FIG. 15 is a cross-sectional view of another reinforcing metal plate.
[FIG. 16] FIG. 16 is a cross-sectional view schematically illustrating a battery module of a second variation of the first embodiment.
[FIG. 17] FIG. 17 is a cross-sectional view schematically illustrating a battery pack.
[FIG. 18] FIG. 18 is a perspective view illustrating the battery pack.
[FIG. 19] FIG. 19 is a view schematically illustrating a temperature regulator of a third variation of the first embodiment.
[FIG. 20] FIG. 20 is a view schematically illustrating a temperature regulator of a fourth variation of the first embodiment.
[FIG. 21] FIG. 21 is a cross-sectional view illustrating a major part of a battery module of a fifth variation of the first embodiment.
[FIG. 22] FIG. 22 is a cross-sectional view schematically illustrating a major part of a battery module of a second embodiment.
[FIG. 23] FIG. 23 is a view illustrating an arrangement of heat pipes of the second embodiment.
[FIG. 24] FIG. 24 is a view illustrating another arrangement of the heat pipes of the second embodiment.
[FIG. 25] FIG. 25 is a cross-sectional view schematically illustrating a major part of a battery module of a first variation of the second embodiment.
[FIG. 26] FIG. 26 is a cross-sectional view schematically illustrating a battery module of a third embodiment.
[FIG. 27] FIG. 27 is a view schematically illustrating a variation of a sheet heater.
[FIG. 28] FIG. 28 is a view schematically illustrating another variation of the sheet heater.
[FIG. 29] FIG. 29 is a view illustrating an arrangement of rod-like metal members of a heat sink.
[FIG. 30] FIG. 30 is a view illustrating another arrangement of the rod-like metal members of the heat sink.
[FIG. 31] FIG. 31 is a view illustrating still another arrangement of the rod-like metal members of the heat sink.
[FIG. 32] FIG. 32 is a view illustrating an example shape of heat dissipating fins.
[FIG. 33] FIG. 33 is an exploded view schematically illustrating a configuration of a battery module of another embodiment.

### DESCRIPTION OF EMBODIMENTS

### -Definition-

The difference between a linear heater and a rod-like heater is the diameter. The linear heater has a diameter of less than 2 mm, and the rod-like heater has a diameter of 2 mm or larger. The cross-sectional shape of the heater is not particularly limited, and may be, for example, round, oval, or polygonal.

Saying that a linear or rod-like heater is embedded in a heat sink means not only a state in which the heater is embedded in the heat sink but also a state in which a groove is formed in a plate-like portion of the heat sink, and the heater is, for example, placed in the groove with part of the heater being exposed.

The term "monolithically formed" means that a member is formed as one continuous piece by stamping, drawing, blanking, etc. in the case of metal, or by injection molding in the case of a resin.

Saying that the series-connected cells are isolated from each other by a heat transferring member in a fluid-tight manner at side surfaces and bottom surfaces of the series-connected cells means a configuration in which between two series-connected cells, side surfaces and bottom surfaces of the cells are isolated by the heat transferring member, and even when liquid leaks from the side surface or the bottom surface of one cell, the liquid does not reach the isolated adjacent cell.

Saying that a heat insulating layer is provided between a set of cells and a side-surface case member means that the cells and a heat transferring member are regarded as a set of cells, a heat insulating layer is provided at a side surface of the set of the cells, and a side-surface case member further surrounds the heat insulating layer.

### -Embodiments-

Embodiments of the present invention will be described in detail below with reference to the drawings. In the drawings, to simplify description, like reference characters are used to designate components that perform substantially the same function. The present invention is not limited to the following embodiments. The embodiment can be modified without deviating from the effective scope of the present invention, and can be combined with other embodiments.

### (First Embodiment)

### <Cell>

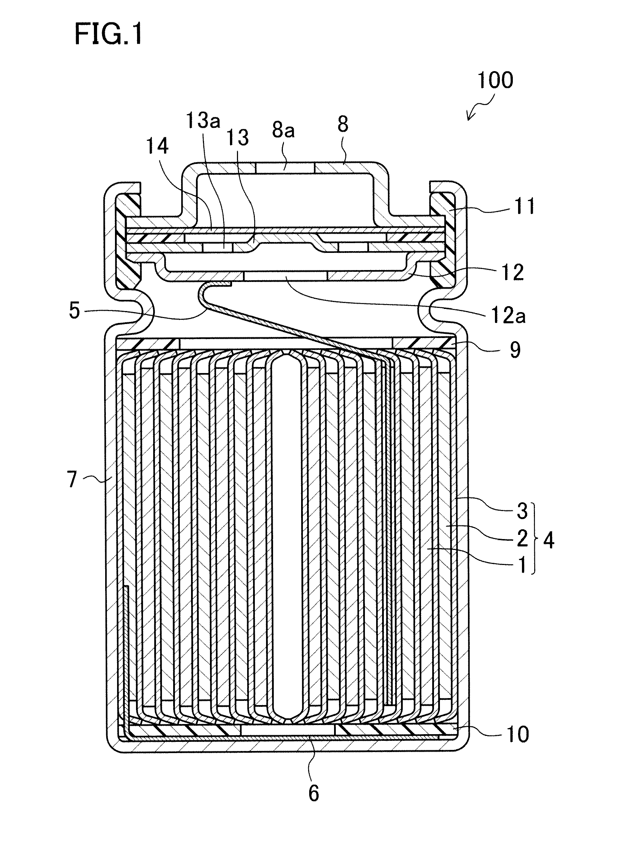

FIG. 1 is a cross-sectional view schematically illustrating a configuration of a battery 100 used in a battery module of a first embodiment of the invention. Note that the battery used in the battery module of the present invention may be a battery which can also be used alone as a power source of portable electronic devices such as notebook-sized personal computers (a battery used in a battery module is hereinafter referred to as a "cell"). In this case, a high-performance general-purpose battery can be used as the cell in the battery module, and thus, performance enhancement and cost reduction of the battery module can easily be made.

The cell 100 used in the battery module of the present invention can be, for example, a columnar lithium ion secondary battery as illustrated in FIG. 1. The lithium ion secondary battery has an ordinary configuration, and has a safety mechanism to release gas to the outside when the pressure in the battery increases due to an internal short-circuit, or the like. The configuration of the cell 100 will specifically be described below with reference to FIG. 1.

As illustrated in FIG. 1, an electrode group 4 formed by winding a positive electrode 1 and a negative electrode 2 with a separator 3 interposed between the positive electrode 1 and the negative electrode 2 is accommodated in a battery case 7 together with a nonaqueous electrolyte. Insulating plates 9 and 10 are provided above and below the electrode group 4. The positive electrode 1 is connected to a filter 12 via a positive electrode lead 5. The negative electrode 2 is connected to a bottom of the battery case 7 also serving as a negative electrode terminal via a negative electrode lead 6.

The filter 12 is connected to an inner cap 13. A raised portion of the inner cap 13 is connected to a valve plate 14 made of metal. The valve plate 14 is connected to a terminal board 8 also serving as a positive electrode terminal. The terminal board 8, the valve plate 14, the inner cap 13, and the filter 12 together seal an opening of the battery case 7 via a gasket 11.

When an internal short-circuit, or the like occurs in the cell 100, and the pressure in the cell 100 increases, the valve body 14 expands toward the terminal board 8. When the connection between the inner cap 13 and the valve body 14 is released, a current path is broken. When the pressure in the cell 100 further increases, the valve body 14 is ruptured. Thus, gas generated in the cell 100 is released to the outside via a through hole 12a of the filter 12, a through hole 13a of the inner cap 13, a rip of the valve body 14, and an opening portion 8a of the terminal board 8.

Note that the safety mechanism to release the gas generated in the cell 100 to the outside is not limited to that of FIG. 1, and may have other configurations.

### <Battery Module>

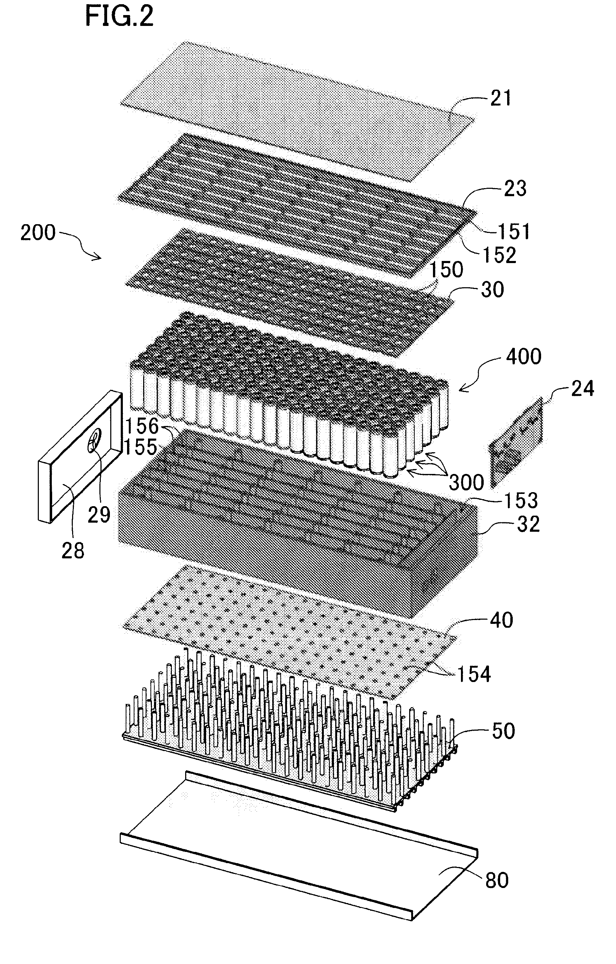

Since the voltage and capacity of one cell 100 are insufficient for application to vehicles, consumer electronics, or the like, a plurality of cells are combined to obtain a battery module as a power source. An example of the battery module is shown in FIG. 2. The cell 100 such as a lithium ion secondary battery has a certain temperature range suitable for operation. When the temperature is higher than the range, the battery capacity decreases, and the battery life is shortened, and when the temperature is lower than the range, the voltage decreases. Thus, to charge/discharge the cell 100 within the optimal temperature range, a battery module 200 of the present embodiment includes a temperature regulator.

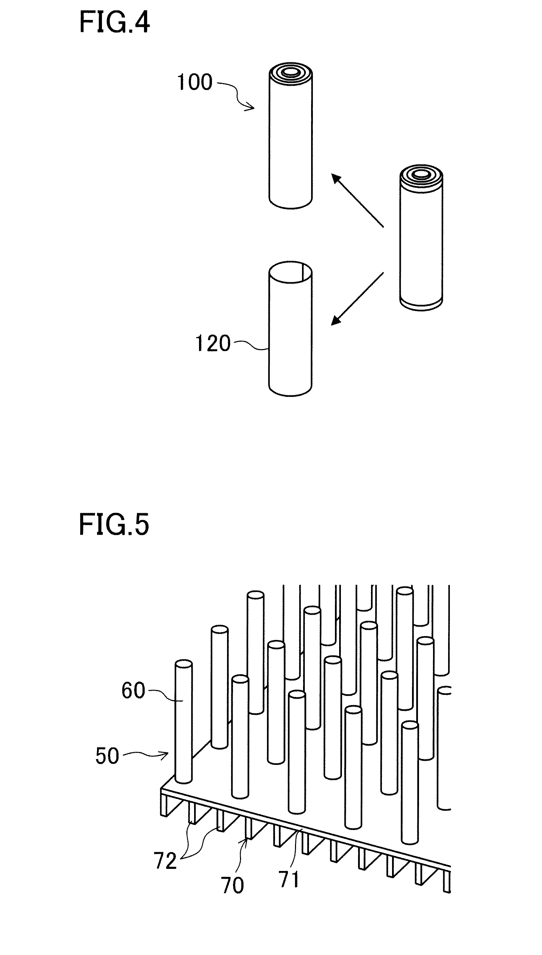

The battery module 200 of the present embodiment includes a battery assembly set 400 comprised of seven battery assemblies 300 serving as components which are aligned in a row, and are electrically connected to each other in series. Each battery assembly 300 includes 20 columnar cells 100 which are aligned in a row, and are electrically connected to each other in parallel. A side surface of each cell 100 is wrapped with a reinforcing metal plate 120 as illustrated in FIG. 4. A direction in which the cells 100 are aligned in one battery assembly 300 is orthogonal to a direction in which the seven battery assemblies 300 are aligned. Moreover, the 140 cells 100 are arranged with their axes (center axes of columns) parallel to each other.

Although not shown in FIG. 2, in each battery assembly 300 of the battery assembly set 400, a negative electrode connection member is connected to bottom surfaces (negative electrodes) of the cells 100 of the components to form an electrically parallel connection. Note that the battery assembly set 400 can be described as a set of the cells 100.

The battery assembly set 400 is placed in a side-surface case member 32. The side-surface case member 32 is made of an electrically insulative substance, and surrounds a side surface of the battery assembly set 400. The temperature regulator is placed in space inside the side-surface case member 32. The temperature regulator inside the side-surface case member 32 illustrated in FIG. 2 is comprised of side walls 156. The side walls 156 form recessed portions 155 in which the battery assemblies 300 are accommodated. The side walls 156 surround side surfaces of the battery assemblies 300, and serve as fluid-tight partitions between the adjacent battery assemblies 300.

An upper-surface substrate 30 is disposed above an upper surface of the battery assembly set 400 to cover the upper surface. The upper-surface substrate 30 electrically connects the adjacent battery assemblies 300 to each other in series. The upper-surface substrate 30 has pores 150 in portions corresponding to the positive electrode terminals of the cells 100 so that gas generated in the cells 100 is released through the pores 150.

An inner lid 23 is disposed above the upper-surface substrate 30. The inner lid 23 has long holes 151 in communication with the pores 150 of the upper-surface substrate 30, and rib-shaped partition members 152 which extend in positions corresponding to space between the adjacent battery assemblies 300.

A lid member 21 is placed over the inner lid 23, and is screwed to the side-surface case member 32. Upper surfaces of the partition members 152 abut a lower surface of the lid member 21.

At one end of the side-surface case member 32, a storage room 153 isolated from the battery assembly set 400 is provided. In the storage room 153, a circuit device 24 for monitoring and controlling charge/discharge of the battery assembly set 400 is disposed. At the other end opposite to the storage room 153, an air-blowing member 28 to which a fan 29 is attached is disposed outside the side-surface case member 32.

Under the side-surface case member 32, a sheet heater 40 is disposed. The sheet heater 40 covers the entirety of a lower surface of the side-surface case member 32, and has pores 154 through which later-described rod-like metal members penetrate.

A temperature regulating main body portion 50 is disposed under the sheet heater 40. As illustrated in FIG. 5, the temperature regulating main body portion 50 includes a heat sink 70 serving as a heat dissipation member, and a large number of rod-like metal members 60 fixed to the heat sink 70. The rod-like metal members 60 are monolithically formed on an upper surface (one surface) of a plate-like portion 71 of the heat sink 70. The heat sink 70 includes the plate-like portion 71 made of metal, and a large number of heat dissipating fins 72 provided on a lower surface (the other surface) of the plate-like portion 71. Note that FIG. 5 shows the temperature regulating main body portion 50 of FIG. 2 rotated by 90 degrees in the plane of the plate-like portion 71 so that the shape of the heat dissipating fins 72 is seen more easily. A lower surface of the sheet heater 40 is in contact with the upper surface of the plate-like portion 71.

A fin cover 80 is disposed under the temperature regulating main body portion 50. Air blown by the fan 29 passes through space between the fin cover 80 and the heat sink 70, thereby taking heat from the heat dissipating fins 72. That is, the air serves as coolant. The fin cover 80 has an opening under the storage room 153, and the air is released through the opening to the outside of the battery module 200.

The entire configuration of the battery module 200 has been described. The battery module 200 will be described below in detail.

First, liquid-tight isolation between the adjacent battery assemblies 300 by the side-surface case member 32 will further be described.

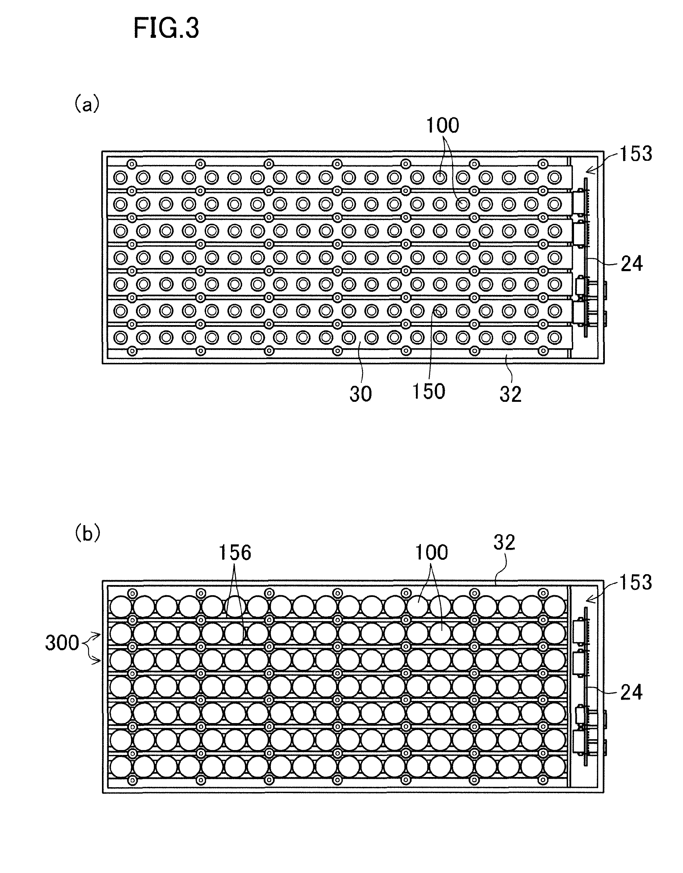

FIG. 3A is a view illustrating the battery module 200 of the present embodiment when viewed from above, where the lid member 21 and the inner lid 23 are removed. FIG. 3B is a view when viewed from above, where the upper-surface substrate 30 is also removed. The plurality of recessed portions 155 are formed in the side-surface case member 32, and the cells 100 are inserted into the recessed portions 155. The side walls 156 forming the recessed portions 155 serve as partitions between the adjacent battery assemblies 300, and the side walls 156 and bottom surfaces of the recessed portions are connected without gaps so that passage of liquid is not allowed. Thus, liquid cannot go back and forth between the series-connected adjacent battery assemblies 300. With this structure, it is possible to ensure prevention of short circuiting due to liquid between the adjacent battery assemblies 300. The side-surface case member 32 may be monolithically formed by injection molding, or the like using, for example, an electrically insulative resin, or may be formed by separately forming side wall portions and bottom surfaces of the recessed portions, and adhering the side wall portions and the bottom surfaces, for example, by an adhesive or by thermal adhesion. Here, liquid which can cause short circuiting may be the electrolyte in the cells 100 or water entering the side-surface case member 32.

When liquid forms a short circuit between the series-connected battery assemblies 300, a current is not taken from the battery module 200, and in addition, a short circuit is also formed in the cell 100, so that the cell 100 may have a high temperature, or gas may be released. Prevention of such problems can be ensured in the battery module 200 of the present embodiment, and thus the battery module 200 is a highly-safe module.

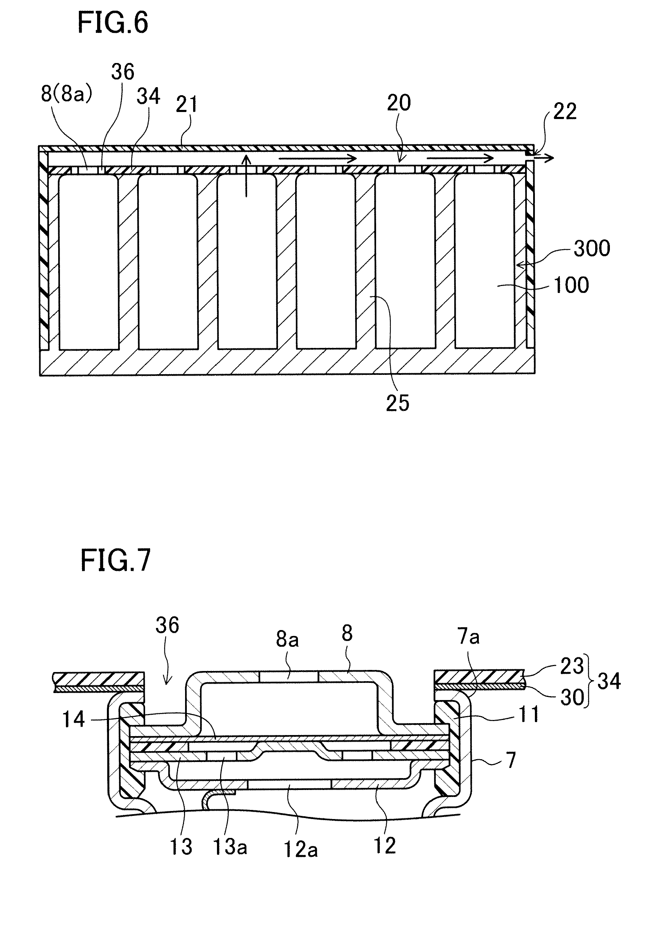

Next, a mechanism to release gas generated in the cell 100 to the outside of the battery module 200 is schematically illustrated in FIG. 6. FIG. 6 is a sectional view schematically illustrating a battery module with one of the battery assemblies 300 each including the plurality of cells 100 which are aligned, and are connected to each other in parallel. The battery module includes the plurality of battery assembles 300 accommodated in a case. As illustrated in FIG. 1, each cell 100 has the opening portion 8a through which gas generated in the cell 100 is released to the outside of the cell. Here, a lower portion of a temperature regulator 25 is included in the case.

The case is partitioned by a partitioning member 34 disposed on one end side of the plurality of cells 100 (in the present embodiment, on a side close to the positive electrode terminal 8) into an accommodation section in which the plurality of cells 100 are accommodated and an exhaust passage section 20 via which gas released through the opening portion 8a of the cell 100 is released to the outside of the battery module. The opening portions 8a of the cells 100 are in communication with the exhaust passage section 20 via openings 36 formed in the partitioning member 34. The partitioning member 34 includes the upper-surface substrate 30 disposed on the cell 100 and the inner lid 23 disposed on the upper-surface substrate 30.

The exhaust passage section 20 is formed between the partitioning member 34 and the lid member 21. Gas released through the opening portion 8a of the cell 100 is released into the exhaust passage section 20 via the opening 36 formed in the partitioning member 34, and then is released to the outside of the battery module via an outlet 22 formed in the case.

The partitioning member 34 is disposed in close contact with one end portion of the cell 100 (in the present embodiment, an end portion of the cell 100 close to the positive electrode terminal 8). Thus, the accommodation section in which the cells 100 are accommodated is fully sealed by the partitioning member 34. Therefore, the gas released through the opening portion 8a of the cell 100 and via the opening 36 formed in the partitioning member 34 to the exhaust passage section 20 does not return to the accommodation section. Gas generated due to an internal short-circuit in the cell 100 has a temperature of several hundreds degrees. However, in this structure, the gas having a high temperature does not severely affect other cells 100. For example, the gas does not melt plastic members in other cells 100. Thus, it can be said that the battery module 200 has a high level of safety. Moreover, even when an internal short-circuit is formed in one cell 100, other cells 100 are not affected, and charge/discharge of the battery assembly 300 is possible. Thus, the battery module 200 can continuously be used although its output is slightly reduced.

FIG. 7 is an enlarged cross-sectional view illustrating a part around the one end portion of the cell 100 on which the partitioning member 34 is disposed. As illustrated in FIG. 7, a shoulder portion 7a of the battery case 7 is in close contact with the partitioning member 34 with a raised portion of the positive electrode terminal 8 being inserted into the opening 36 in the partitioning member 34. Thus, the partitioning member 34 seals the accommodation section of the cells 100, so that the gas released through the opening portion 8a formed in the raised portion of the positive electrode terminal 8 does not return to the accommodation section.

Next, the temperature regulator will be described. The temperature regulator of the battery module 200 of the present embodiment includes a heat transferring member which is in contact with the cells 100 to take heat from the cells 100 or to provide heat to the cells 100, and a heater (sheet heater 40) which provides heat to the heat transferring member and to a heat dissipation member to dissipate heat transferred from the heat transferring member.

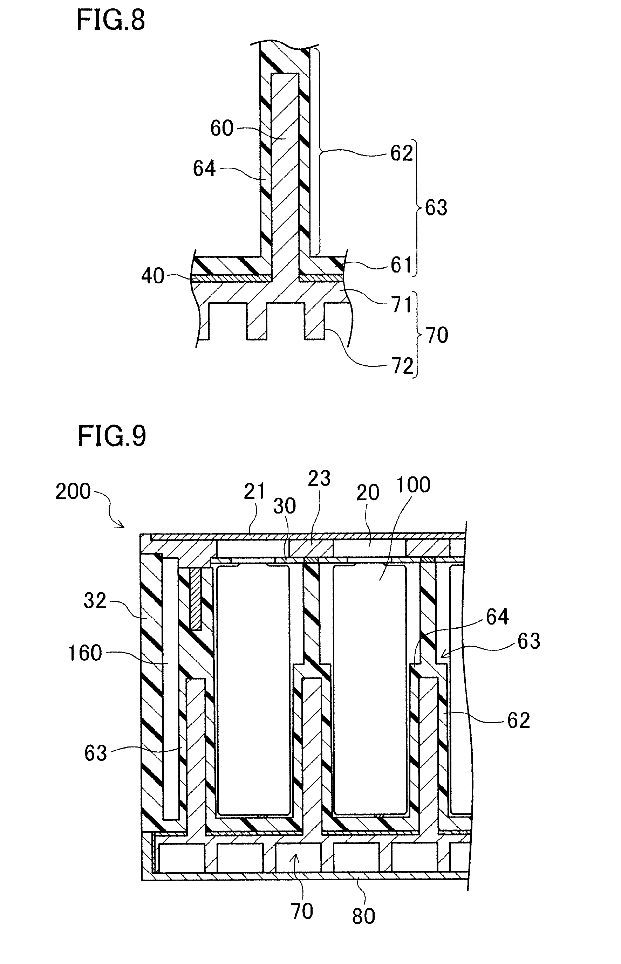

As schematically illustrated in FIG. 8, a heat transferring member 63 includes insertion portions 62 inserted between the side surfaces of the adjacent cells 100, and a base portion 61 facing the bottom surfaces (lower surfaces) of the cells 100. Each insertion portion 62 includes the rod-like metal member 60 and a resin portion 64. The resin portion 64 covers an outer surface of the rod-like metal member 60, and extends above the rod-like metal member 60. The base portion 61 and the resin portion 64 are monolithically made of an electrically insulative resin having high thermal conductivity. Here, the rod-like metal member 60 may also be formed together, or the rod-like metal member 60 may be inserted into the insertion portion 62 after the resin portion 64 is formed. The insertion portions 62 are the side walls 156 of the recessed portions inside the side-surface case member 32. The base portion 61 forms bottoms of the recessed portions 155. The side walls 156 are screwed to the lid member 21. This means, in other words, at upper parts of the insertion portions 62, the side walls 156 are fixed by screwing to the lid member 21.

With this configuration, most of an outer surface of the cell 100 except for its upper surface is in contact with the heat transferring member 63, so that heat transferred by the heat transferring member 63 is quickly dissipated through the heat sink 70. Thus, the cell 100 is efficiently cooled. Heat of the sheet heater 40 is quickly transferred to the heat transferring member 63, so that the temperature of the cell 100 can be raised in a short period of time.

The sheet heater 40 is sandwiched between the base portion 61 of the heat transferring member 63 and the upper surface of the plate-like portion 71 of the heat sink 70. Since the sheet heater 40 is thus sandwiched between the two surfaces, the sheet heater 40 is planarly in close contact with the base portion 61 of the heat transferring member 63, so that heat can be effectively transferred.

Next, a boundary portion between the side-surface case member 32 and the set of the cells 100 accommodated in the temperature regulator 25 will be described with reference to FIG. 9. Note that the set of the cells 100 accommodated in the temperature regulator 25 means the cells 100 and the heat transferring member 63 all together. FIG. 9 is a cross-sectional view schematically illustrating the battery module 200, where a cross section orthogonal to a direction in which the cells 100 are aligned in the battery assembly 300 is shown.

In the set of the cells 100 accommodated in the temperature regulator 25, an outermost portion of the side surface of the set is the heat transferring member 63. Air space 160 serving as a heat insulating layer is provided between the outermost portion, which is the heat transferring member 63 and the side-surface case member 32 serving as a side wall portion of the battery module 200. With this structure, the side surface and the upp er surface, except for a lower surface of the set of the cells 100 accommodated in the temperature regulator 25 are surrounded by the air space 160 serving as an heat insulating layer (where air space close to the upper surface is the exhaust passage section 20), and the set of the cells 100 is cooled or heated from the lower surface. Thus, each cell 100 is uniformly cooled or heated.

When such a heat insulating layer is not provided, cooling or heating at a center portion of the set of the cells 100 accommodated in the temperature regulator 25 is delayed compared to that at a circumferential portion of the set, so that only the center portion has a higher or lower temperature than the circumferential portion. This deteriorates battery characteristics of the cells 100 at the center portion compared to those of the cells 100 at the circumferential portion, and in addition, shortens the life of the cells 100 at the center portion. However, in the battery module 200 of the present embodiment, variations in temperature of each cell 100 can be reduced, so that deterioration in battery characteristics or reduction in life of only the cells 100 at the center portion do not occur. Note that air is provided between the heat transferring member 63 and the cell 100, in particular, between the resin portion 64 of the insertion portion 62 and the cell 100.

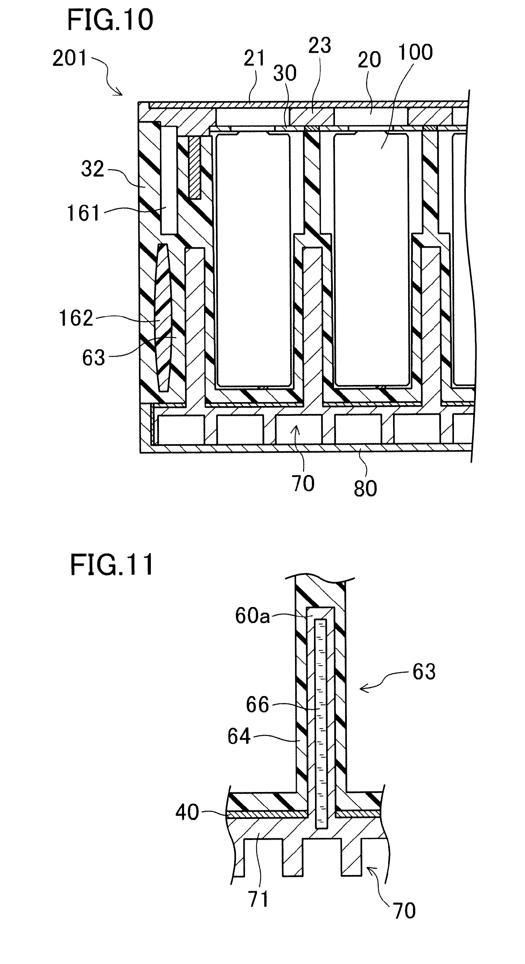

Moreover, as illustrated in FIG. 10, a resin foam layer 162 may be used as a heat insulating layer disposed at the boundary portion between the side-surface case member 32 and the set of the cells 100 accommodated in the temperature regulator 25. The resin foam layer 162 may be formed by forming a portion serving as the resin foam layer 162 separately in advance, and disposing the formed portion in a predetermined position when the side-surface case member 32 is formed, or may be formed by using the technique of mixing supercritical gas called MuCell (registered trademark) with a molten polymer to form plastic foam having a foam cell diameter of 0.5 µm -100 µm. As illustrated in FIG. 10, air space 161 and the resin foam layer 162 may be used in combination, or only a resin foam layer may be used as a heat insulating layer of a battery module 201.

Additional information on reinforcement of the cell 100 is that the side surface of the cell 100 is covered with the reinforcing metal plate 120 as illustrated in FIG. 4, and thus in case of cracks formed in the side surface due to increased pressure in the cell 100, the reinforcing metal plate 120 can prevent contents in the cell 100 from leaking out of the cell 100, so that the safety can be ensured.

The battery module 200 of the present embodiment includes the fan 29 for cooling, and thus can be used alone as a power source, and requires no additional cooling installation. Therefore, the battery module 200 can be easily used as power sources of various applications.

As also illustrated in FIG. 11, a heat pipe 66 may be embedded in a rod-like metal member 60a of the heat transferring member 63, or a rod-like metal member itself may be formed as a heat pipe. The heat pipe 66 reaches the plate-like portion 71 of the heat sink 70, so that the efficiency of heat dissipation and/or cooling is increased.

### <First Variation of Battery Module>

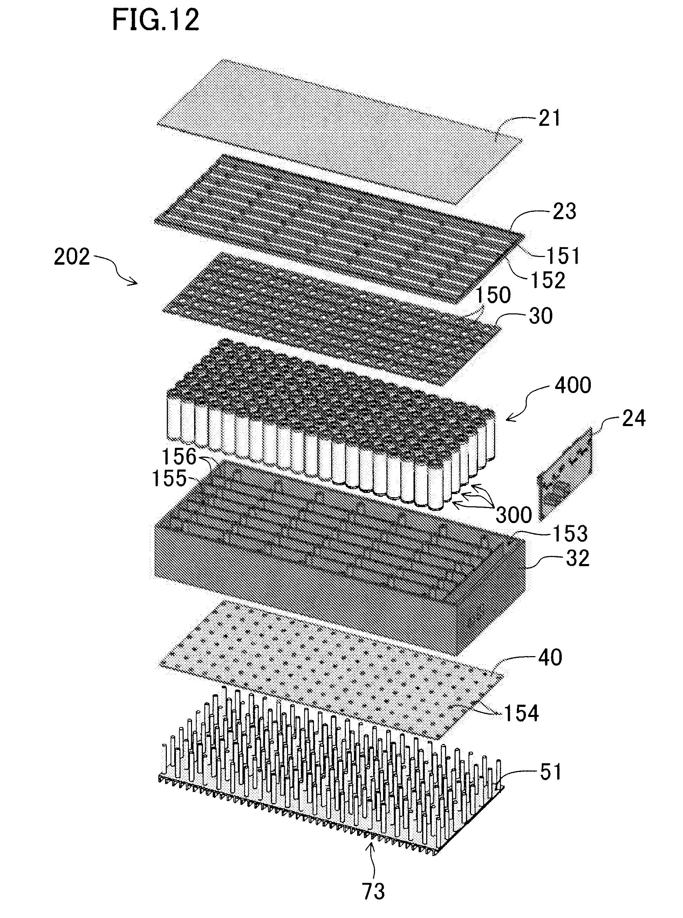

A first variation of the first embodiment will be described with reference to FIG. 12. A temperature regulator, components related to the temperature regulator, and reinforcing metal plates for reinforcing side surfaces of cells 100 of a battery module 202 of the present variation are different from those of the above-described battery modules 200, 201. The description of identical or equivalent components is omitted.

The battery module 202 of the present variation does not include an air-blowing means for cooling. It is provided that the air-blowing means is disposed outside the battery module 202. That is, the battery module 202 does not include an air-blowing member and a fan. The shape of a heat sink 73 of a temperature regulator main body 51 is different from that of the above-described heat sink 70. A direction in which rib-shaped heat dissipating fins extend is inclined at 90 degrees to a direction in which the heat dissipating fins 72 extend. A fin cover is not provided. With this configuration, it is possible to reduce the size and weight compared to the battery modules 200, 201.

For example, the battery module 202 of the present variation may be used such that multiple ones of the battery module 202 are aligned with their side surfaces facing each other and the heat dissipating fins of the heat sinks 73 extending in the same direction to obtain a battery pack, to which an air-blowing means is provided to cool the heat dissipating fins.

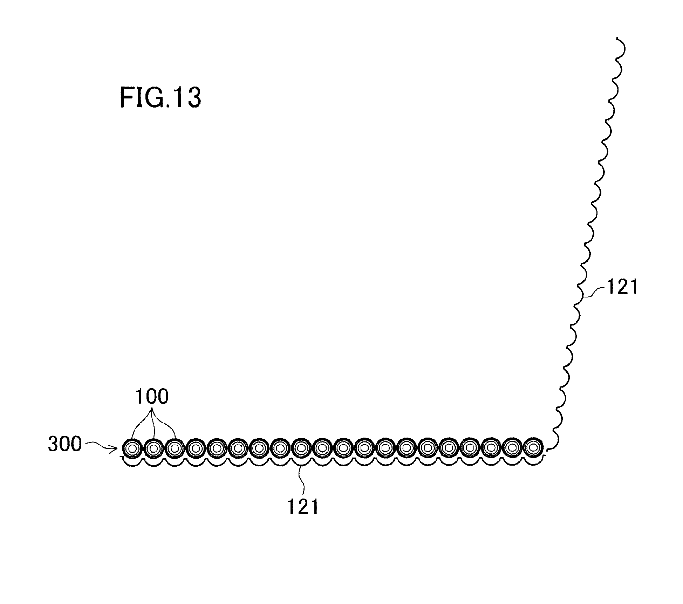

Moreover, as illustrated in FIG. 13, reinforcing metal plates 121 are not wound around the side surfaces of the cells 100, respectively, but cover side surfaces of twenty cells 100 aligned as a battery assembly 300 all together. Specifically, the side surfaces of the twenty cells 100 aligned in a row are sandwiched between two corrugated reinforcing metal plates 121 to reinforce the side surfaces. With this configuration, it is possible to obtain advantages similar to those obtained by winding the metal reinforcing plate 120 around the side surface of each cell, and cost reduction can also be achieved because the side surfaces of the twenty cells 100 are reinforced all together.

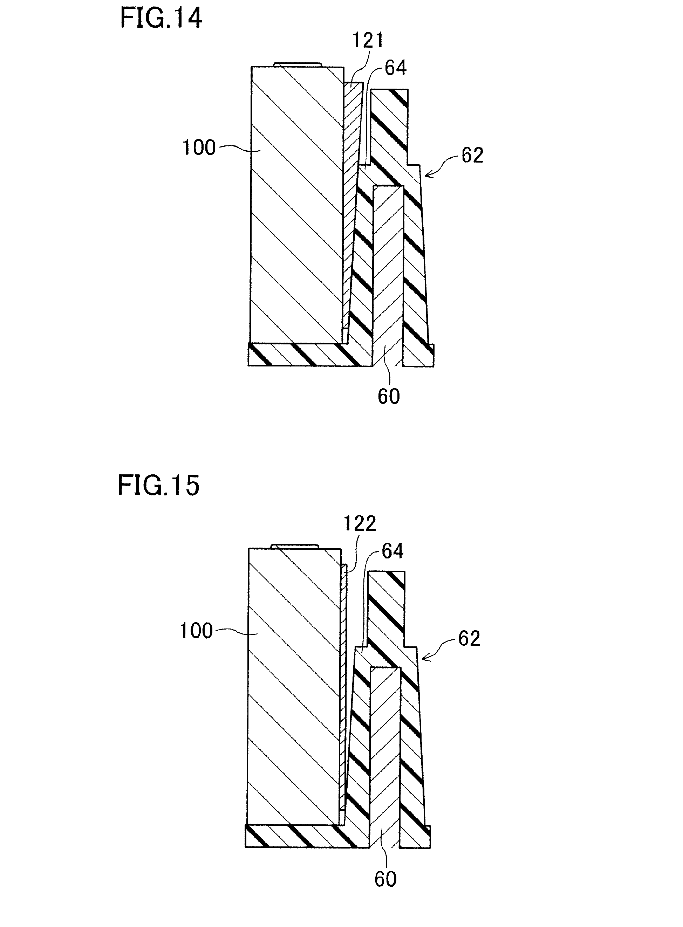

As illustrated in FIG. 14, the reinforcing metal plate 121 has a tapered thickness that is thick on an upper portion of the cell 100, and is thin on a lower portion of the cell 100. FIG. 14 is a cross-sectional view schematically illustrating a part of the inside of the battery module 202, where one cell 100 and the insertion portion 62 of the heat transferring member 63 are shown in the cross-sectional view. The heat transferring member 63 is generally made of a resin by, for example, injection molding. Thus, the heat transferring member 63 has a tapered shape that the diameter decreases from a base to an upper portion of the insertion portion 62 so that the heat transferring member 63 can be removed from a mold after molding. Therefore, as illustrated in FIG. 15, when a reinforcing metal plate 122 is made of a metal plate having a uniform thickness, the reinforcing metal plate 122 is in contact with the resin portion 64 of the insertion portion 62 at the base of the insertion portion 62, but a gap is formed between the reinforcing metal plate 122 and the resin portion 64 at the upper portion of the insertion portion 62. This significantly reduces the heat transfer efficiency between the reinforcing metal plate 122 and the insertion portion 62, and the cell 100 is not fixed, and is unsteady. However, in the present variation, the reinforcing metal plate 121 has a tapered thickness that gradually decreases from the upper portion to the lower portion of the cell 100, so that contact is ensured from the base to the upper portion of the insertion portion 62. Thus, it is possible to keep high heat transfer efficiency, and the cell 100 can firmly be fixed and held to prevent unsteadiness, thereby preventing the unsteadiness of the cell 100.

### <Second Variation Battery Module>

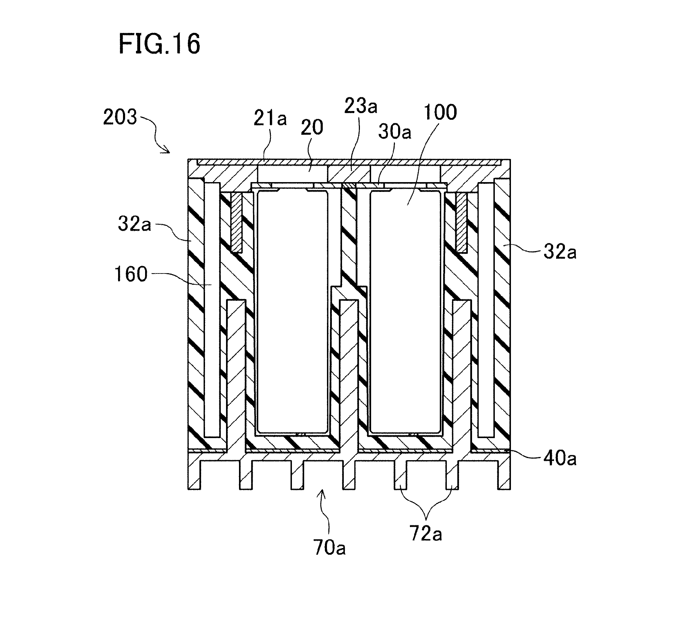

A second variation of the first embodiment will be described with reference to FIGS. 16, 17, 18. A battery module 203 of the present variation is basically the same as the battery module of the first variation, where the battery module 203 includes only two battery assemblies 300. The description of components similar to those of the first variation will be omitted below.

The battery module 203 of the second variation is formed by accommodating two battery assemblies 300 in a side-surface case member 32a, and putting an upper-surface substrate 30a, an inner lid 23a, and a lid member 21a on the battery assemblies 300. Rib-shaped heat dissipating fins 72a of a heat sink 70a are different from those of the first variation in that the heat dissipating fins 72a extend in a direction the same as a direction in which the cells 100 of the battery assemblies 300 are aligned. The side-surface case member 32a, the upper-surface substrate 30a, the inner lid 23a, the lid member 21a, a sheet heater 40a, and the heat sink 70a are reduced in size since the number of battery assemblies 300 is reduced to two.

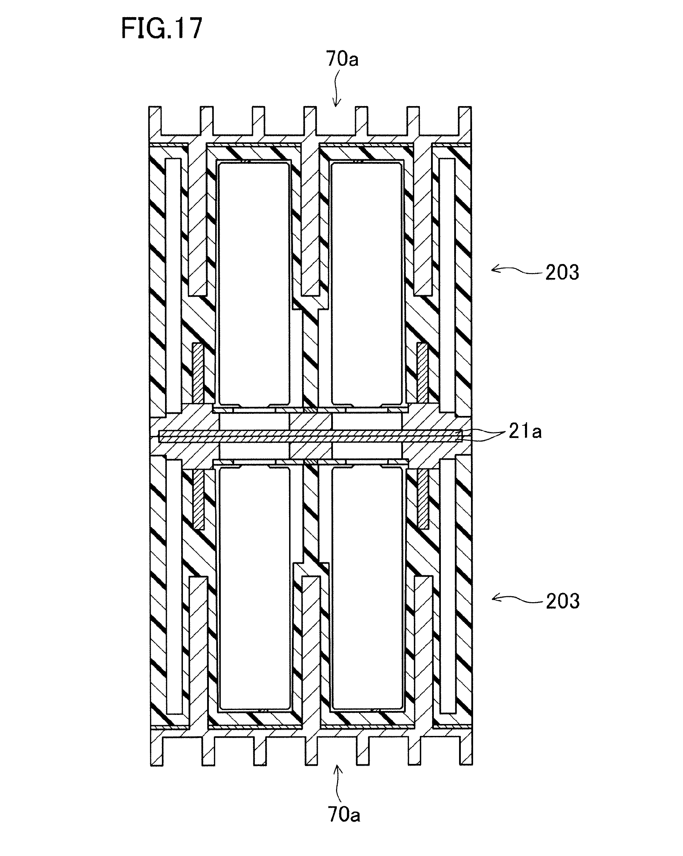

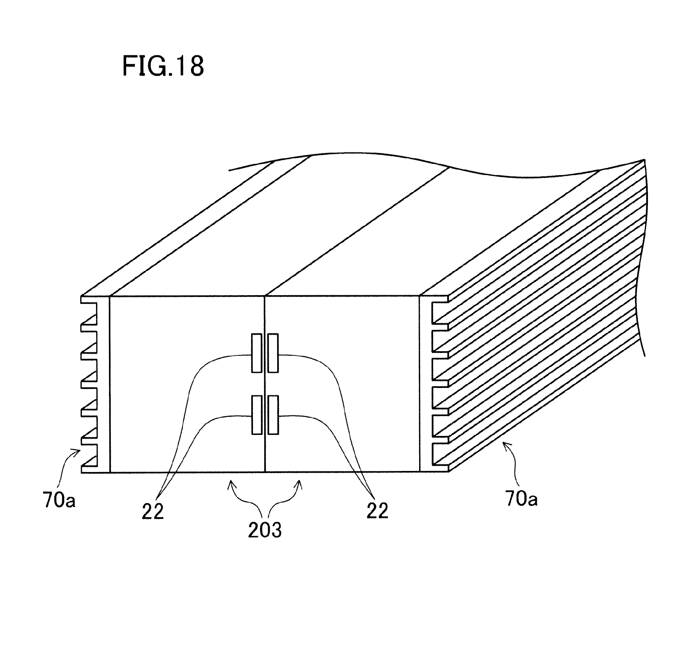

FIG. 17 is a cross-sectional view of a battery pack in which two battery modules 203 of the present invention are aligned. FIG. 18 is a perspective view schematically illustrating the battery pack of FIG. 17. The two battery modules 203 are aligned with their lid members 21a facing each other, thereby forming the battery pack. Two heat sinks 70a are respectively disposed on two surfaces of the rectangular battery pack which are opposite to each other. Such a battery pack is small in size, and is reduced in thickness compared to the above-described battery modules 200, 201, and the battery module 202 of the first variation. Therefore, when this battery pack is used as a power source, a wide choice of options regarding mounting space is offered, thereby increasing flexibility of design of vehicles or electric devices in which the battery pack is mounted.

### <Third Variation of Battery Module>

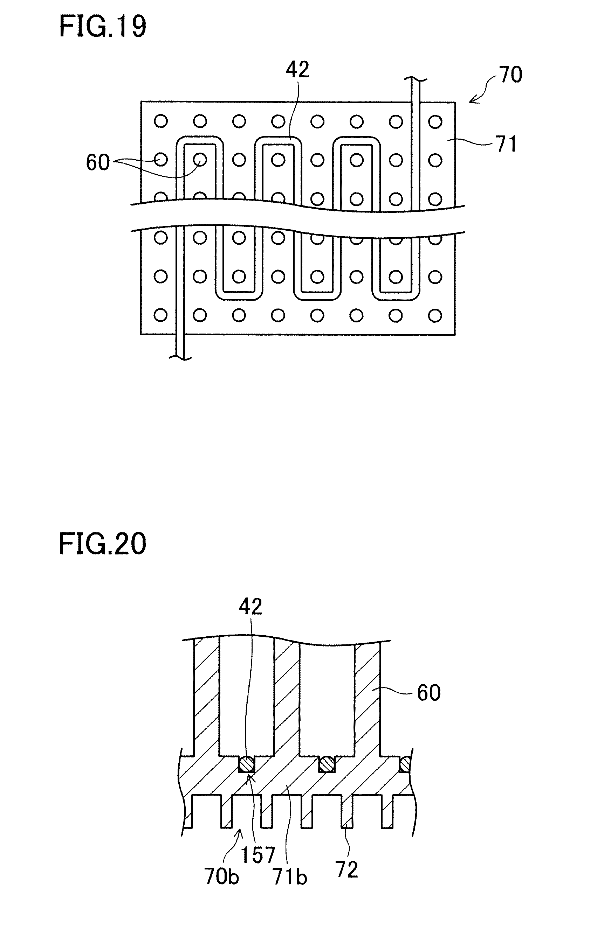

A third variation of the first embodiment will be described with reference to FIG. 19. The present variation is the same as the battery module 200 of the first embodiment except that a linear heater 42 is used instead of the sheet heater 40, and the description of identical or equivalent components is omitted.

The heater 42 of the third variation is a linear heater such as a nichrome wire, and is disposed on the upper surface of the plate-like portion 71 of the heat sink 70. The linear heater 42 is arranged on the upper surface of the plate-like portion 71 in an evenly-spaced zigzag (serpentine) pattern to uniformly heat the battery assembly set 400. In the same manner as the sheet heater 40, the linear heater 42 is also sandwiched between the upper surface of the plate-like portion 71 and the base portion 61 to be in close contact with a lower surface of the base portion 61, which increases the heating efficiency, and enables uniform heating within the lower surface. Note that the shape of the heater 42 is not limited to a linear shape, but the heater 42 may have a rod-like shape. The cross-sectional shape of the heater 42 is not limited to be round, but may be oval, rectangular, or the like.

### <Fourth Variation of Battery Module>

A fourth variation of the first embodiment will be described with reference to FIG. 20. The present variation is the same as the third variation except that the linear heater 42 is embedded in a heat sink 70b, and the description of identical or equivalent components is omitted.

The heater 42 of the fourth variation is embedded in a groove 157 formed in a plate-like portion 71b of the heat sink 70b. An upper surface of the plate-like portion 71b is substantially flush with an uppermost portion of the heater 42. In the present variation, the linear heater 42 is in close contact with the lower surface of the base portion 61, which increases the heating efficiency, and enables uniform heating within the lower surface. In addition, the lower surface of the base portion 61 is in close contact with the upper surface of the plate-like portion 71b compared to the third variation, so that the cooling efficiency is increased compared to the third variation. Moreover, the heater 42 is fixed in the groove 157, which is different from the third variation, and thus the battery module can be easily assembled.

### <Fifth Variation of Battery Module >

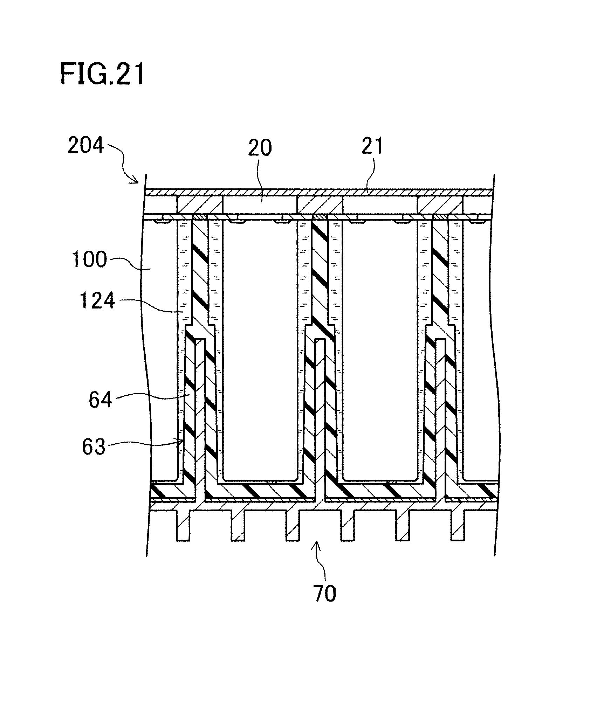

A fifth variation of the first embodiment will be described with reference to FIG. 21. The present variation is the same as the first variation except that liquid 124 is provided as coolant between the heat transferring member 63 and the cell 100, and the description of identical or equivalent components is omitted.

From the viewpoint of cost effectiveness, the resin portion 64 of the heat transferring member 63 is preferably formed by a method of using a mold, for example, by injection molding, and in this case, a taper is required to remove the molded product from the mold. Due to the taper, a gap is formed between the heat transferring member 63 and the cell 100. When the gap is filled with the liquid 124, it is possible to reduce instant temperature rise, and to increase the heat transfer efficiency between the cell 100 and the heat transferring member 63. Note that the heat transferring member 63 isolates the series-connected cells 100 from each other in a fluid-tight manner, and the partitioning member 34 is in close contact with the shoulder portion 7a of the cell 100 as illustrated in FIG. 7, so that a short circuit is not formed between the cells 100 even when the liquid 124 is conductive. That is, in space partitioned by the heat transferring member 63, only bottom surfaces and side surfaces of the parallel-connected cells 100 are exposed, so that portions of the plurality of cells 100 which have the same potential are accommodated in the space.

The liquid 124 may be any kinds of liquid such as water, oil, organic solvent, etc., but liquid which corrodes the resin portion 64, the battery case 7 of the cell 100, the reinforcing metal plate, etc. or liquid which freezes and is solidified during use is not suitable.

### (Second Embodiment)

A second embodiment includes heat dissipating fins of a heat sink which are disposed on an outer surface of a side wall of a battery module. The battery module of the second embodiment is the battery module of the first variation of the first embodiment in which the temperature regulator is mainly modified. The modified portion will be described below. The description of components identical or equivalent to those of the first variation of the first embodiment is omitted.

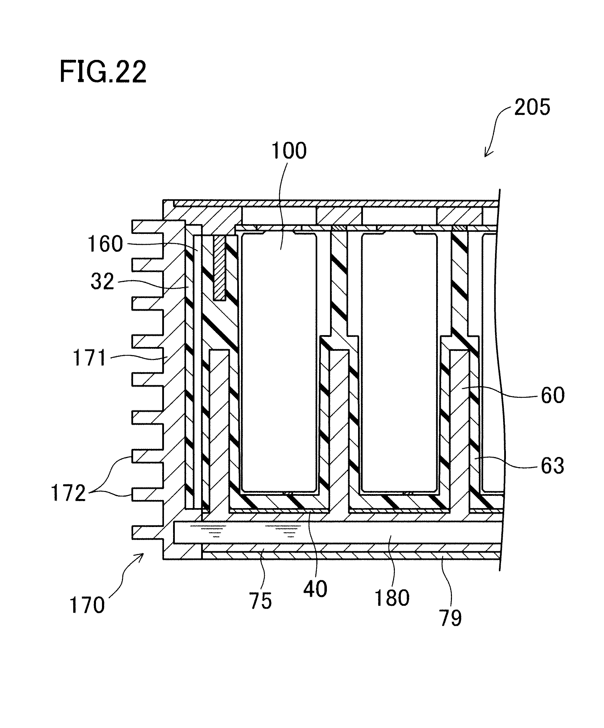

As illustrated in FIG. 22, a battery module 205 of the present embodiment includes heat pipes 180 embedded in a metal plate-like portion 75 facing lower surfaces of cells 100. Rod-like metal members 60 are attached to the metal plate-like portion 75. A lower surface of the plate-like portion 75 is covered with a cover 79. At a side wall of the battery module 205, heat dissipating substrate portions 171 made of plate-like metal are disposed on outer surfaces of a side-surface case member 32. A lower portion of each heat dissipating substrate portion 171 is connected to the plate-like portion 75. Heat dissipating fins 172 of a heat sink 170 are provided on an outer surface of each heat dissipating substrate portion 171 (a surface of the heat dissipating substrate portion 171 which is opposite to the side-surface case member 32).

The heat pipes 180 extend from the plate-like portion 75 into the heat dissipating substrate portions 171. With this structure, heat generated in the cell 100 is transferred to the plate-like portion 75 via a heat transferring member 63, is quickly transferred to the heat dissipating substrate portions 171 via the heat pipes 180, and is dissipated through the heat dissipating fins 172 to the outside of the battery module 205. Using the heat pipes 180 allows heat to be efficiently and quickly dissipated. Moreover, since the heat dissipating fins 172 are disposed on a side surface of the battery module 205, it is possible to fulfill demands of design of a battery pack, which have not been fulfilled in the battery module of the first embodiment.

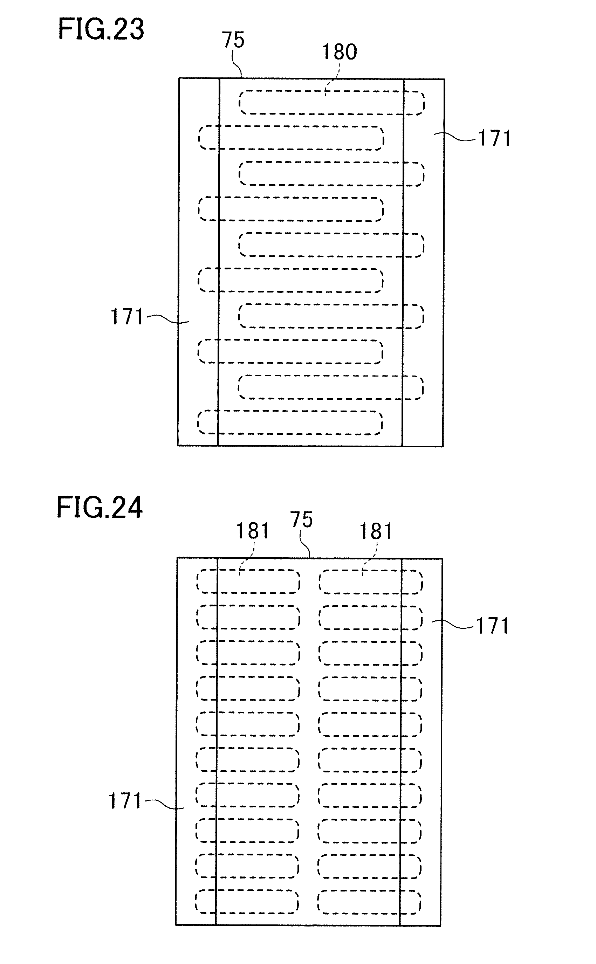

Examples of arrangement of the heat pipes are illustrated in FIGS. 23, 24. The heat pipes 180 are arranged such that one end of each heat pipe 180 is located inside the heat dissipating substrate portion 171. As illustrated in FIG. 23, in an example arrangement, the plurality of heat pipes 180 extending from one end to the other end of the plate-like portion 75 are aligned in parallel, where one end of a heat pipe 180 extends into one of two heat dissipating substrate portions 171 provided on both sides of the plate-like portion 75, and one end of another heat pipe 180 adjacent to the above heat pipe 180 extends into the other one of the heat dissipating substrate portions 171. In another example arrangement, as illustrated in FIG. 24, two heat pipes 181 are provided in the width direction of the plate-like portion 75, where one ends of the heat pipes 181 face with each other at the center in the width direction of the plate-like portion 75, and the other ends of the heat pipes 181 respectively extend into the heat dissipating substrate portions 171 on both sides of the plate-like portion 75.

### <First Variation of Battery Module>

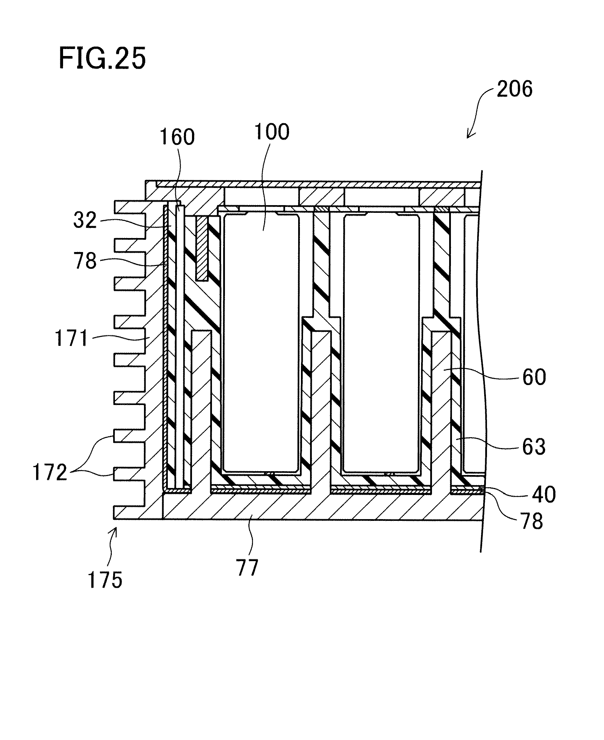

A first variation of the second embodiment will be described with reference to FIG. 25. A battery module 206 of the present variation is substantially the same as the battery module 205 except that a heat transfer sheet 78 instead of the heat pipes is used as a medium for transferring heat from a plate-like portion 77 to heat sinks 175, and the description of identical or equivalent components is omitted.

In the present variation, the heat transfer sheet 78 which is highly heat conductive is sandwiched between an upper surface of the plate-like portion 77 made of metal and a heater 40, where the rod-like metal members 60 are fixed to the upper surface of the plate-like portion 77. The heat transfer sheet 78 extends to a side wall portion of the battery module 206, and is sandwiched between each of the heat dissipating substrate portions 171 and the side-surface case member 32. With this structure, heat generated in the cell 100 is transferred to the plate-like portion 77 via the heat transferring member 63, is quickly transferred to the heat dissipating substrate portions 171 via the heat transfer sheet 78, and is dissipated through heat dissipating fins 172 to the outside of the battery module 206. The heat transfer sheet 78 may be a sheet made of metal fibers, a sheet containing a large amount of metal fibers, or a graphite sheet. The battery module 206 of the present variation does not include a lower surface cover, but a lower surface cover may be provided.

### (Third Embodiment)

A third embodiment is a battery module in which a heat dissipation member does not include a heat sink, but includes a heat exchanger and a heat exchanging pipe connected to the heat exchanger. The battery module of the third embodiment is the battery module of the first variation of the first embodiment in which the temperature regulator is mainly modified. The modified portion will be described below. The description of components identical or equivalent to those of the first variation of the first embodiment is omitted.

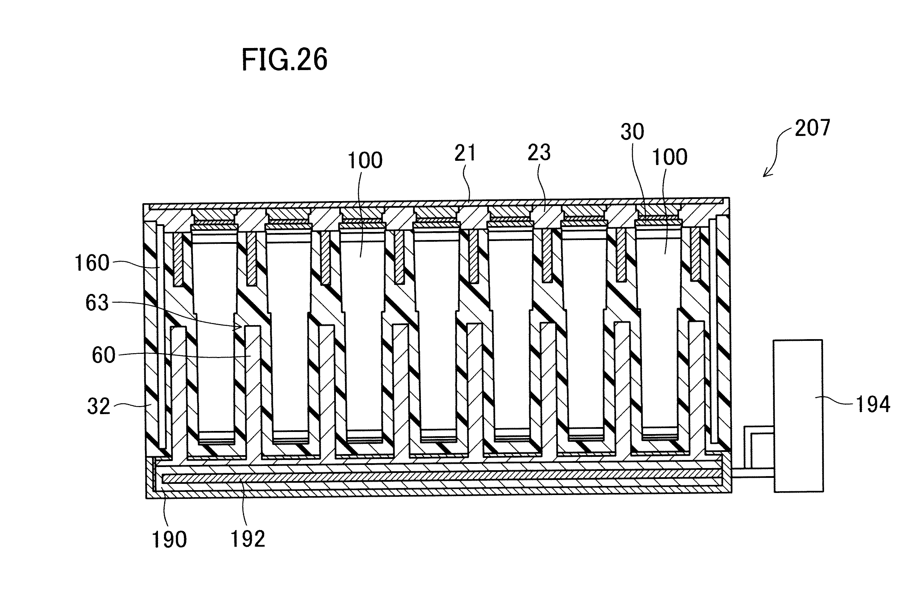

As illustrated in FIG. 26, a heat dissipation member of a battery module 207 of the present embodiment includes a plate-like portion 190 made of metal under a heat transferring member 63, a heat exchanging pipe 191 embedded in the plate-like portion 190, and a heat exchanger 192 which is connected to the heat exchanging pipe 191 and is disposed outside the plate-like portion 190. The heat exchanging pipe 191 is filled with coolant, which is circulated by the heat exchanger 192, and is cooled or heated. With this configuration, it is possible to increase the cooling efficiency and the heating efficiency.

### (Other Embodiments)

The embodiments described above are mere examples of the present invention, and do not limit the present invention. For example, the configurations of the battery assembly and the battery assembly set are not limited to those of the above embodiments. The number of cells included in the battery assembly and the number of battery assemblies included in the battery assembly set each may be greater than or equal to 1, where the upper limit depends on the load limit, limitation in installation space, handiness, etc.

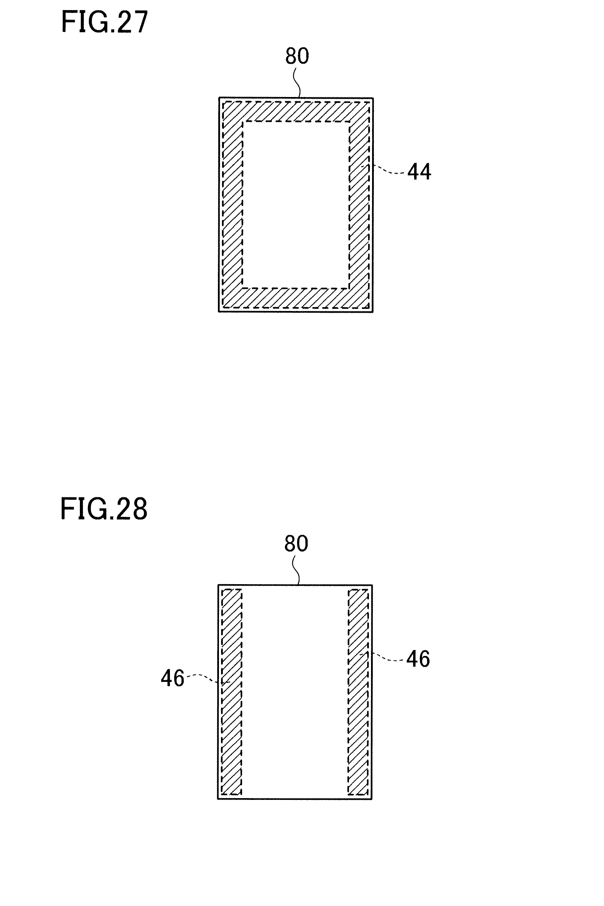

Moreover, the sheet heater may be disposed in a frame form on a lower surface of the battery assembly set, for example, as schematically illustrated in FIG. 27. This is because usually, in the course of cooling inside the battery module, the cooling advances from the outermost shell in contact with the outside air having a low temperature to the center, and thus the temperature of the entirety of the battery assembly set is likely to be uniform when an outer shell portion is heated. Alternatively, as schematically illustrated in FIG. 28, two sheet heaters 46 may be disposed on side surfaces which have a large area in contact with the outside air.

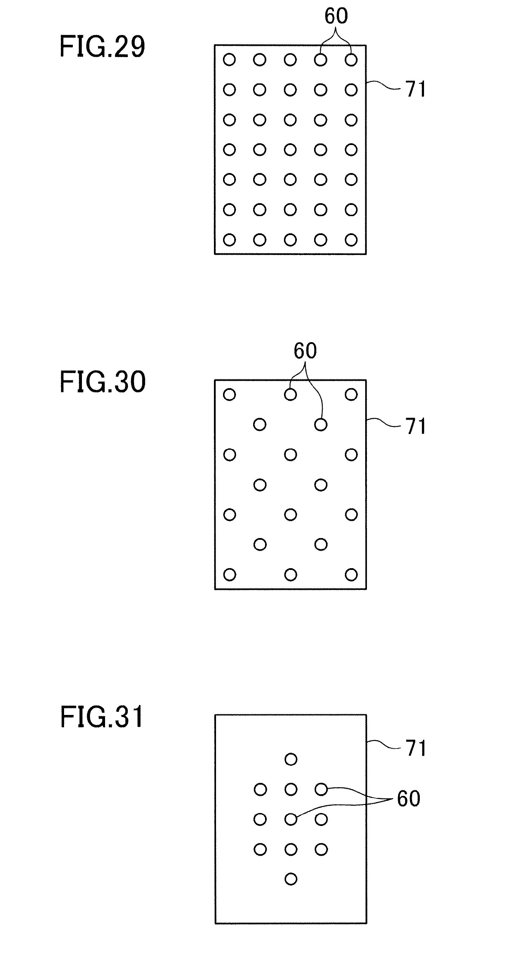

In the above embodiments, the rod-like metal members 60 of the heat sink are arranged in rows and columns at regular intervals in a lattice form as illustrated in FIG. 29 so that the rod-like metal member 60 is inserted into every space surrounded by side surfaces of four cells 100. However, as illustrated in FIG. 30, the number of the rod-like metal members 60 may be halved, and the rod-like metal members 60 may be arranged in a staggered pattern so that the rod-like metal members 60 are arranged at regular intervals. Alternatively, as illustrated in FIG. 31, the rod-like metal members 60 may not be arranged on an outer edge portion of the plate-like portion 71, but may be arranged only on a center portion of the plate-like portion 71. As described above, the battery assembly set has a higher temperature at the center portion than at the outer shell portion. Thus, when the rod-like metal members 60 are arranged as illustrated in FIG. 31, only the center portion can be cooled so that the temperature of the entirety of the battery assembly set is uniform.

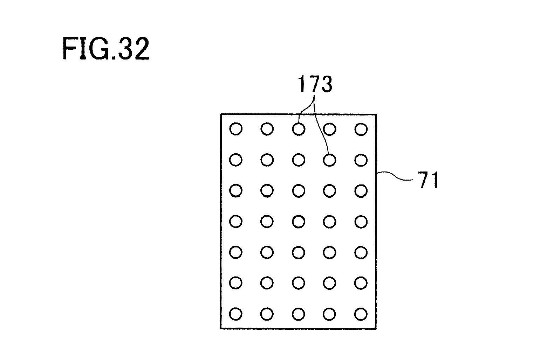

As to the shape and the arrangement of the heat dissipating fins of the heat sink, the heat dissipating fins do not necessarily extend from the plate-like portion 71 in a belt-like pattern (ribbed pattern) as in, for example, the first embodiment, but pin-shaped (columnar) heat dissipating fins 173 as schematically illustrated in FIG. 32 may be possible. The pin-shaped heat dissipating fins 173 provide the advantage that the cooling can be performed in the same way even when the cooling air is in a vertical, lateral, or diagonal direction. In this case, the size and the number of the heat dissipating fins 173 are not particularly limited, but when the diameter of the heat dissipating fins 173 is smaller, and the number of the heat dissipating fins 173 is larger, the cooling efficiency is higher. The heat dissipating fins 173 are arranged in rows and columns at regular intervals in lattice form in FIG. 29. However, as to the interval between the adjacent heat dissipating fins 173, the position of the heat dissipating fins 173, etc., the number of the heat dissipating fins 173 may be larger on a position at which the temperature is likely to be high as described above. Moreover, the heat dissipating fins 173 may be arranged in positions corresponding to the rod-like metal members 60 provided on a side of the plate-like portion 71 opposite to the heat dissipating fins 173, or the position of the heat dissipating fins 173 may be shifted with respect to the position of the rod-like members 60.

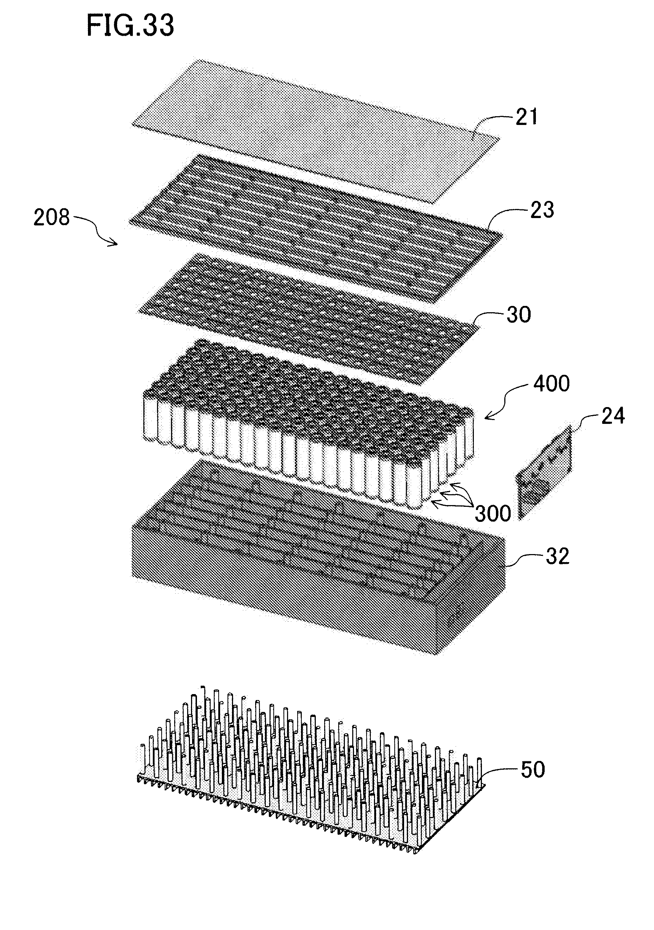

Depending on places where the battery module is used, a battery module without a heater as illustrated in FIG. 33 may be possible. FIG. 33 shows a battery module 208 obtained by removing the heater from the battery module of the first variation of the first embodiment. The heater is not necessary in a place, such as in a tropical region, where the temperature is always 10°C or higher.

The rod-like metal members and the heat sink may be separately formed, and then they may be fixed and integrated to each other by welding, screwing, adhering, or the like.

The side-surface case member and the base portion of the heat transferring member may be separately formed, and may be fixed and integrated to each other by adhering, welding, or the like.

The heat insulating layer, or the like may be provided between the heater and the heat sink plate-like portion. In this case, the heater may be plate-shaped, linear, or rod-shaped.

Coolant for cooling the heat sink is not limited to air, but may be liquid. In the case of liquid coolant, a pump instead of the fan is preferably used, and the battery module is preferably placed in a container in which the coolant flows.

Moreover, the properties of the embodiments and the variations described above may be applied to other embodiments or variations.

### INDUSTRIAL APPLICABILITY

As described above, the battery module of the present invention has high safety, and can efficiently regulate the temperature of the cells, and thus is useful as power sources, or the like of vehicles, industrial applications, domestic applications, etc.

### DESCRIPTION OF REFERENCE CHARACTERS

- 8a: Opening Portion
- 20: Exhaust Passage Section
- 21: Lid Member
- 25: Temperature Regulator
- 29: Fan
- 30: Upper-Surface Substrate
- 32: Side-Surface Case Member
- 34: Partitioning Member
- 40: Sheet Heater
- 42: Linear Heater
- 44: Sheet Heater
- 46: Sheet Heater
- 50: Temperature Regulating Main Body Portion
- 60: Rod-Like Metal Member
- 61: Base Portion
- 62: Insertion portion
- 63: Heat Transferring Member
- 64: Resin Portion
- 66: Heat Pipe
- 70: Heat Sink
- 71: Plate-Like Portion
- 72: Heat dissipating fin
- 73: Heat Sink
- 75: Plate-Like Portion
- 80: Fin Cover
- 100: Cell
- 120: Reinforcing Metal Plate
- 121: Reinforcing Metal Plate
- 160: Air Space
- 162: Resin Foam Layer
- 170: Heat Sink
- 171: Heat Dissipating Substrate Portion
- 172: Heat Dissipating Fin
- 175: Heat Sink
- 180: Heat Pipe
- 181: Heat Pipe
- 190: Plate-Like Portion
- 191: Heat Exchanging Pipe
- 192: Heat Exchanger
- 200: Battery Module
- 201: Battery Module
- 202: Battery Module
- 203: Battery Module
- 204: Battery Module
- 205: Battery Module
- 206: Battery Module
- 207: Battery Module
- 208: Battery Module
- 300: Battery Assembly
- 400: Battery Assembly Set

## Claims

1. A battery module comprising:
a plurality of cells serving as cylindrical secondary batteries; and
a temperature regulator configured to regulate a temperature of the cells, wherein
the cells are aligned with their side surfaces adjacent to each other, and all the cells or assemblies each obtained by connecting the cells in parallel are electrically connected to each other in series,
the temperature regulator includes a heat transferring member configured to take or give heat from or to the cells, and a heat dissipation member to which the heat transferring member is fixed,
the heat transferring member includes a plurality of insertion portions inserted into space surrounded by the side surfaces of the plurality of cells, and a base portion facing lower surfaces of the cells,
at least a part of the heat transferring member which faces the cells is made of an electrically insulative substance, and
the cells connected to each other in series are isolated from each other by the heat transferring member in a liquid-tight manner at the side surfaces and bottom surfaces of the cells.

2. The battery module of claim 1, further comprising:
a side-surface case member surrounding a side surface of a set of the cells which are aligned; and
a lid member covering an upper surface portion of the set, wherein
the side-surface case member is fixed to the base portion of the heat transferring member, or the side-surface case member and the base portion of the heat transferring member are monolithically formed, and
the lid member is fixed to the heat transferring member.

3. The battery module of claim 2, wherein
each cell has an opening portion through which gas generated in the cell is released outside the cell,
a partitioning member is disposed between the set of the cells and the lid member, and
the partitioning member partitions the battery module into a section in which the cells are provided, and an exhaust passage section through which the gas released through the opening portion of the cell is released to the outside.

4. The battery module of claim 3, wherein
in the section in which the cells are provided, air exists in a gap between the heat transferring member and each cell.

5. The battery module of claim 3, wherein
in the section in which the cells are provided, liquid coolant exists in a gap between the heat transferring member and each cell.

6. The battery module of any one of claims 3-5, wherein
the heat dissipation member is a heat sink, and
the heat sink includes a plate-like portion one face of which faces the lower surfaces of the cells, and a heat dissipating fin cooled by the coolant.

7. The battery module of claim 6, wherein
the heat dissipating fin is provided on a face of the plate-like portion which is opposite to the one face of the plate-like portion.

8. The battery module of claim 6, wherein
the heat dissipating fin is provided on a heat dissipating substrate portion, and the heat dissipation substrate portion is disposed on an outer surface of the side-surface case member, and is connected to the plate-like portion.

9. The battery module of claim 8, wherein
a heat pipe is embedded in the plate-like portion, and
the heat pipe extends into the heat dissipating substrate portion.

10. The battery module of any one of claims 3-5, wherein
the heat dissipation member includes
a plate-like portion one face of which faces the lower surfaces of the cells,
a heat exchanging pipe which is embedded in the plate-like portion, and is filled with coolant, and
a heat exchanger which circulates the coolant, and cools or heats the coolant.

11. The battery module of any one of claims 6-10, wherein
the temperature regulator further includes a heater.

12. The battery module of claim 11, wherein
the heater has a sheet shape, and is sandwiched between the base portion of the heat transferring member and the one face of the heat sink.

13. The battery module of claim 11, wherein
the heater is in a linear or rod shape, and is sandwiched between the base portion of the heat transferring member and the one face of the heat sink.

14. The battery module of claim 11, wherein
the heater is in a linear or rod shape, and is embedded in the plate-like portion of the heat sink.

15. The battery module of claim 11, further comprising:
a rod-like metal member provided in each of the insertion portions, wherein
the rod-like metal member is fixed to the heat sink, or the rod-like metal member and the heat sink are monolithically formed.

16. The battery module of any one of claims 3-15, further comprising:
a heat insulating layer provided between the side-surface case member and the set of the cells .

17. The battery module of claim 16, wherein
the heat insulating layer is air space.

18. The battery module of claim 16, wherein
the heat insulating layer is made of resin foam.

19. The battery module of any one of claims 6-9, further comprising:
a fin cover facing the heat dissipating fin of the heat sink; and
a fan configured to blow space between the fin cover and the heat sink.

20. The battery module of any one of claims 3-19. wherein
the side surface of each cell is covered with a reinforcing metal plate.

21. The battery module of any one of claims 3-19, wherein
side surfaces of a row of cells are sandwiched between and covered with two reinforcing metal plates.

22. The battery module of any one of claims 3-19, further comprising:
a plate-like cell protecting member having a plurality of holes penetrating through the plate-like cell protecting member in a thickness direction, wherein
the cells are inserted into the holes, and
the side surfaces of the cells which are adjacent to each other are isolated by the cell protecting member from each other.
